## Europäisches Patentamt
## European Patent Office
## Office européen des brevets

(19)

(11) Veröffentlichungsnummer: **0 071 797**
**B1**

(12) ## EUROPÄISCHE PATENTSCHRIFT

(45) Veröffentlichungstag der Patentschrift:
24.10.84

(51) Int. Cl.³: **C 01 B 25/235**

(21) Anmeldenummer: **82106358.3**

(22) Anmeldetag: **15.07.82**

(54) **Verfahren zur Entfernung von organischen Verunreinigungen aus Phosphorsäure.**

(30) Priorität: **12.08.81 DE 3131847**

(43) Veröffentlichungstag der Anmeldung:
**16.02.83 Patentblatt 83/7**

(45) Bekanntmachung des Hinweises auf die Patenterteilung:
**24.10.84 Patentblatt 84/43**

(84) Benannte Vertragsstaaten:
**BE DE FR GB IT NL SE**

(56) Entgegenhaltungen:
**EP - A - 0 016 996**
**EP - A - 0 027 607**

(73) Patentinhaber: **HOECHST AKTIENGESELLSCHAFT,
Postfach 80 03 20, D-6230 Frankfurt am Main 80 (DE)**

(72) Erfinder: **Schimmel, Günther, Dr., Am Beissel 27,
D-5042 Erftstadt (DE)**
Erfinder: **Maurer, Alexander, Dr., Am grünen Weg 7,
D-5030 Hürth (DE)**
Erfinder: **Heymer, Gero, Dr., Fasanenaue 12,
D-5042 Erftstadt (DE)**
Erfinder: **Gradl, Reinhard, Dr., Am grünen Weg 6,
D-5030 Hürth (DE)**

## Beschreibung

Phosphorsäuren enthalten oft — bedingt durch ihre Herstellung — Verunreinigungen organischer Art, von denen sie für bestimmte Verwendungszwecke befreit werden müssen.

Ein Grossteil der färbenden organischen Komponenten lässt sich durch Ausflocken und/oder Behandeln der Säure mit Aktivkohle entfernen (EP-A2 Nr. 0016531), doch bleibt dabei eine nicht unerhebliche Menge organischer Substanz in der Phosphorsäure gelöst zurück.

Zur Beseitigung dieser letzten Reste hat man sich in der Vergangenheit Verfahren bedient, die auf der Behandlung der Säuren mit Wasserstoffperoxid bei erhöhten Temperaturen — ggf. in Gegenwart von Katalysatoren — beruhen (DE-C Nr. 884358, DE-A Nr. 2910711, EP-A1 Nr. 0027607).

Als Katalysatoren werden in diesen Fällen z.B. Vanadium- oder Chromsalze, Mischoxide zwischen Aluminium einerseits und Mangan, Kupfer, Eisen anderseits sowie Edelmetalle wie Platin oder Palladium eingesetzt.

Gemessen an der Erzielung hoher Wirkungsgrade liegen die Nachteile dieser bekannten Verfahren in den mit der diskontinuierlichen Arbeitsweise verbundenen geringen Raum-Zeit-Ausbeuten und ihrem relativ hohen $H_2O_2$-Verbrauch. In diesen Fällen wird die zu reinigende Phosphorsäure in einem Rührkessel auf die Reaktionstemperatur gebracht, im Verlauf mehrerer Stunden kontinuierlich mit der entsprechenden Menge Wasserstoffperoxid versetzt (vgl. nachfolgendes Beispiel 1) und sodann abgelassen.

Versucht man nun, dieses Verfahren unter Beibehaltung der Parameter Temperatur, Verweilzeit und spezifische $H_2O_2$-Menge in einen kontinuierlich betriebenen Rührkesselreaktor zu übertragen, wobei die beiden Reaktanten kontinuierlich eingespeist und nach entsprechender Verweilzeit über einen Überlauf abfliessen, so stellt man einen wesentlich verschlechterten $C_{org}$-Abreicherungsgrad fest (vgl. nachfolgendes Beispiel 2). Dieser bemerkenswerte Effekt ist nicht ohne weiteres plausibel und erklärbar.

Ziel der vorliegenden Erfindung war es daher, ein Verfahren zur Oxidation des in der Phosphorsäure gelösten organischen Materials zu entwickeln, das unter Einsatz möglichst geringer Mengen an Wasserstoffperoxid eine kontinuierliche Betriebsweise ermöglicht und den $C_{org}$-Gehalt auch in stark verunreinigten Reinsäuren, z.B. solchen auf Basis Florida-Phosphat, auf Werte unter 100 ppm absenkt und eine wasserhelle Säure erzeugt, deren Durchlässigkeit gegenüber thermischer Phosphorsäure (0,5 cm Schichtdicke; 365 nm) mindestens 90% beträgt.

Überraschenderweise lassen sich die $C_{org}$-Abreicherungsergebnisse der diskontinuierlichen Betriebsweise auch mit einer kontinuierlichen Betriebsweise erzielen, wenn man die zur Entfernung der organischen Verunreinigungen erforderliche Gesamtmenge an Wasserstoffperoxid in mehrere Teilmengen aufteilt und diese Teilmengen kontinuierlich an einer entsprechenden Anzahl getrennter hintereinander liegender Stellen mit einem gleichfalls kontinuierlich fliessenden Strom der Phosphorsäure vermischt.

Am besten führt man diesen Prozess in einer mehrstufigen Rührkesselkaskade oder einer mit Rühreinrichtungen versehenen Kolonne durch, die in ihrer Längsrichtung in Abständen angeordnete Dosierstutzen für das Wasserstoffperoxid trägt.

Vorzugsweise teilt man die gesamte Wasserstoffperoxidmenge in etwa gleich grosse Teilmengen auf. Die Anzahl dieser Teilmengen — und entsprechend die der Dosierungsstellen — sollte mindestens 2, vorteilhafterweise jedoch 3 bis 5 betragen. Die Abstände zwischen den Dosierungsstellen sollten dabei zweckmässigerweise so gewählt werden, dass — in Abhängigkeit von der Strömungsgeschwindigkeit der Säure — die Reaktion der jeweils zugemischten Peroxidmenge mit den organischen Verunreinigungen etwa beendet ist, bevor an der nachfolgenden Stelle frisches Peroxid zudosiert wird.

Als Katalysatoren können die für diese Zwecke bereits bekannten Stoffe eingesetzt werden. Die Reaktionstemperatur beträgt üblicherweise 40 bis 120° C.

Zur Reinigung geeignet sind insbesondere extraktiv gereinigte Nassverfahrensphosphorsäuren, die einen $P_2O_5$-Gehalt von 25 bis 65 Gew.-% und organische Verunreinigungen $C_{org}$ von 50 bis 700 ppm aufweisen. Das Wasserstoffperoxid gibt man in Form wässeriger Lösungen zu.

Die nachfolgenden Beispiele sollen den Gegenstand der Erfindung näher erläutern, ohne die Erfindung darauf zu beschränken.

### Beispiel 1 (Vergleich, diskontinuierlich)

Zu 2000 g extraktiv gereinigter Phosphorsäure auf Basis Florida-Erz (470 ppm $C_{org}$, 60% $P_2O_5$, 1 ppm V) werden bei 80° C unter Rühren über einen Zeitraum von 5 h 38 ml $H_2O_2$ (30%ig), das entspricht 3,5%/$P_2O_5$, mittels einer Pumpe eindosiert. Der Gehalt an $C_{org}$ beträgt anschliessend 100 ppm, Abreicherung 78,7%.

### Beispiel 2 (Vergleich, kontinuierlich)

Ein zylindrischer Glasreaktor mit 2 abgetauchten Einläufen für Phosphorsäure und Wasserstoffperoxid, Volumen 2 l, sowie einem Glasrührer und Überlauf wird mit stündlich 0,4 l Reinphosphorsäure (60% $P_2O_5$, 490 ppm $C_{org}$, 1 ppm V) und 12,5 ml/h 30%igen Wasserstoffperoxid (= 3,5%/$P_2O_5$), entsprechend einer Verweilzeit von 5 h, beschickt. Die Temperatur wird durch elektrische Beheizung auf 80° C gehalten. Die abfliessende Säure ist gelb gefärbt und hat einen $C_{org}$-Gehalt von 220 ppm, Abreicherung 55,1%.

### Beispiel 3

Im Unterschied zu Beispiel 2 werden 4 Glasreaktoren, Volumen je 2 l, hintereinandergeschaltet, wobei in Reaktor 1 2 l/h Phosphorsäure (Daten wie Beispiel 2), Gesamtverweilzeit 4 h, und jeweils 12,8 ml $H_2O_2$ in Reaktoren 1, 2, 3 und 4 gepumpt werden. Die Gesamtmenge an $H_2O_2$ beträgt 51,2 ml/h, entsprechend 2,8%/$P_2O_5$. Die Temperatur wird bei 80° C gehalten. Die abfliessende Säure ist wasserhell und hat einen $C_{org}$-Gehalt von 100 ppm, Abreicherung 79,6%.

*Beispiel 4*

In Abänderung von Beispiel 3 beträgt die Phosphorsäuremenge 1,6 l/h, Gesamtverweilzeit 5 h, und die Einzelmenge an $H_2O_2$ 12,8 ml/h, Gesamtmenge 51,2 ml/h, das entspricht 3,5%/$P_2O_5$. Die abfliessende Säure ist wasserhell und hat einen $C_{org}$-Gehalt von 60 ppm, Abreicherung 87,4%.

*Beispiel 5*

In Abänderung von Beispiel 3 beträgt die Reaktionstemperatur 100° C. Die abfliessende Säure hat einen $C_{org}$-Gehalt von 40 ppm, entsprechend einer Abreicherung von 91,8%. Ihre Durchlässigkeit, gemessen in einer 0,5 cm Küvette bei 365 nm gegen eine gleichkonzentrierte thermische Phosphorsäure, beträgt 95,5%.

*Beispiel 6*

Es wird völlig analog Beispiel 3 verfahren, jedoch wird eine vanadinfreie Säure verwendet und in jeden Reaktor ein etwa 10×10 cm grosses Platinnetz gehängt. Die abfliessende Säure ist wasserhell und hat einen $C_{org}$-Gehalt von 100 ppm.

Die Ergebnisse aus den Beispielen 2 bis 6 sind summarisch in der folgenden Tabelle festgehalten.

| Beispiel | Verweilzeit (h) | Zahl der Reaktoren | $H_2O_2$/$P_2O_5$ (%) | ppm $C_{org}$ nach Behandlung | Abreicherung (%) |
|---|---|---|---|---|---|
| 2 | 5 | 1 | 3,5 | 220 | 55,1 |
| 3 | 4 | 4 | 2,8 | 100 | 79,6 |
| 4 | 5 | 4 | 3,5 | 60 | 87,4 |
| 5 | 4 | 4 | 2,8 | 40 | 91,8 |
| 6 | 4 | 4 | 2,8 | 100 | 79,6 |

## Patentanspruch

Verfahren zur Entfernung organischer Verunreinigungen aus Phosphorsäure, indem man bei erhöhten Temperaturen die Säure — gegebenenfalls in Gegenwart von Katalysatoren — mit Wasserstoffperoxid behandelt, dadurch gekennzeichnet, dass man die zur Entfernung der organischen Verunreinigungen erforderliche Gesamtmenge an Wasserstoffperoxid in mehrere Teilmengen aufteilt und diese Teilmengen kontinuierlich an einer entsprechenden Anzahl getrennter, hintereinander liegender Stellen mit einem gleichfalls kontinuierlich fliessenden Strom der Phosphorsäure vermischt.

## Claim

Process for removing organic contaminants from phosphoric acid by treating the acid at elevated temperatures with hydrogen peroxide, optionally in the presence of a catalyst, which comprises: subdividing the overall quantity of hydrogen peroxide necessary for effecting the removal of the organic contaminants into a plurality of separate portions and mixing these portions continuously at an appropriate number of separate serially arranged places one downstream of another with an equally continuously flowing stream of phosphoric acid.

## Revendication

Procédé pour éliminer les impuretés organiques de l'acide phosphorique par traitement de l'acide à température élevée par le péroxyde d'hydrogène, éventuellement en présence de catalyseurs, caractérisé en ce que l'on répartit la quantité totale de péroxyde d'hydrogène nécessaire pour éliminer les impuretés organiques en plusieurs portions qu'on mélange en continu dans un nombre correspondant de points successifs séparés avec un courant de l'acide phosphorique s'écoulant également en continu.